# EUROPÄISCHE PATENTSCHRIFT

(11) **EP 3 336 823 B1**
(45) Veröffentlichungstag und Bekanntmachung des Hinweises auf die Patenterteilung: **06.03.2024**
(21) Anmeldenummer: 17195587.5
(22) Anmeldetag: 10.10.2017
(51) Int. Cl.: G06V 20/58, G08G 1/01

(54) **VERFAHREN ZUR ZUSTANDSÜBERWACHUNG EINES OBJEKTS, DATENVERARBEITUNGSANLAGE UND FAHRZEUG**
METHOD FOR MONITORING THE CONDITION OF AN OBJECT, DATA PROCESSING SYSTEM AND VEHICLE
PROCÉDÉ DE SURVEILLANCE D'ÉTAT D'UN OBJET, INSTALLATION DE TRAITEMENT DE DONNÉES ET VÉHICULE

(30) Priorität: 16.12.2016 DE 102016124596
(43) Veröffentlichungstag der Anmeldung: 20.06.2018
(73) Patentinhaber: Bayerische Motoren Werke Aktiengesellschaft, 80809 München (DE); Deutsche Telekom AG, 53113 Bonn (DE)
(72) Erfinder: Gehrsitz, Thomas, 81377 München (DE); Zimmermann, Sebastian, 80331 München (DE); Schnieders, Dominik, 52078 Aachen (DE)
(74) Vertreter: 2SPL Patentanwälte PartG mbB

(56) Entgegenhaltungen:
- WO-A1-2013/173911
- WO-A1-2015/129045
- CN-A- 105 849 790
- DE-A1-102008 043 743
- US-A1- 2009 140 887
- US-A1- 2017 011 270

## Beschreibung

### Technisches Gebiet

Ausführungsbeispiele befassen sich mit der Zustandsüberwachung von Objekten. Insbesondere befassen sich Ausführungsbeispiele mit Verfahren zur Zustandsüberwachung eines Objekts, einer Datenverarbeitungsanlage und einem Fahrzeug.

### Hintergrund

Im öffentlichen Raum befindet sich eine Vielzahl von Objekten, deren Zustand regelmäßig überprüft werden muss. Rein beispielhaft sei hier auf Verkehrsschilder, Beläge von Fahrbahnen oder die Bepflanzung am Straßenrand verwiesen. Bekannte Verfahren zur Zustands-überprüfung erfolgen manuell (d.h. durch Personen, die die Objekte vor Ort begutachten) und sind daher mit hohem Aufwand verbunden.

Dokument WO 2015/129045 A1 betrifft ein System zur Bilderfassung mit einem Bilderfassungsgerät und einem Terminal. Das Bilderfassungsgerät erfasst ein Bild, das von dem Terminal aufgenommen wurde, sowie standortbezogene Informationen zur Aufnahme. Auf Basis des Bildes bestimmt es den Zustand einer in dem Bild enthaltenen Straße und zeichnet die Informationen auf, während es eine Verknüpfung zwischen dem Straßenzustand und den Lokalisierungsinformationen erstellt. Wenn das Terminal eine Anfrage an das Bilderfassungsgerät zur Information über den Zustand einer bestimmten Straße sendet, sendet das Bilderfassungsgerät dem Terminal den ermittelten Straßenzustand sowie die Lokalisierungsinformationen.

Dokument CN 105 849 790 A betrifft ein Verfahren zum Teilen von Straßenzustandsinformationen. Das Verfahren umfasst folgende Schritte: Ein Server empfängt eine Straßenzustandsinformationsanfrage, die von einem ersten Terminal gesendet wird und die eine besorgniserregende Straßenzustandsposition enthält. Der Server bestimmt ein zweites Terminal gemäß der besorgniserregenden Straßenzustandsposition, wobei das zweite Terminal über eine Straßenzustandsaufnahmefähigkeit verfügt und der Abstand zwischen dem zweiten Terminal und der besorgniserregenden Straßenzustandsposition kleiner als ein voreingestellter Schwellenwert ist. Der Server sendet eine Straßenzustandsfreigabe-Anfrage an das zweite Terminal, sodass das zweite Terminal entsprechend der besorgniserregenden Straßenzustandsposition einen Straßenzustand freigibt.

Es besteht ein Bedürfnis, eine verbesserte Möglichkeit zur Zustandsüberwachung von Objekten bereitzustellen.

### Zusammenfassung

Dieser Bedarf wird durch ein Verfahren, ein Programm sowie eine Datenverarbeitungsanlage gemäß den unabhängigen Ansprüchen gedeckt. Weitere Ausführungsbeispiele sind in den abhängigen Ansprüchen angegeben.

### Figurenkurzbeschreibung

Ausführungsbeispiele werden nachfolgend bezugnehmend auf die beiliegenden Figuren näher erläutert. Es zeigen:
Fig. 1 zeigt ein Ablaufdiagramm eines ersten Ausführungsbeispiels eines Verfahrens für eine Datenverarbeitungsanlage zur Zustandsüberwachung eines Objekts;
Fig. 2 zeigt ein Ablaufdiagramm eines zweiten Ausführungsbeispiels eines Verfahrens für eine Datenverarbeitungsanlage zur Zustandsüberwachung eines Objekts;
Fig. 3 zeigt ein Ausführungsbeispiel einer Datenverarbeitungsanlage; und
Fig. 4 zeigt ein Ausführungsbeispiel eines Fahrzeugs.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen " einer", " eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

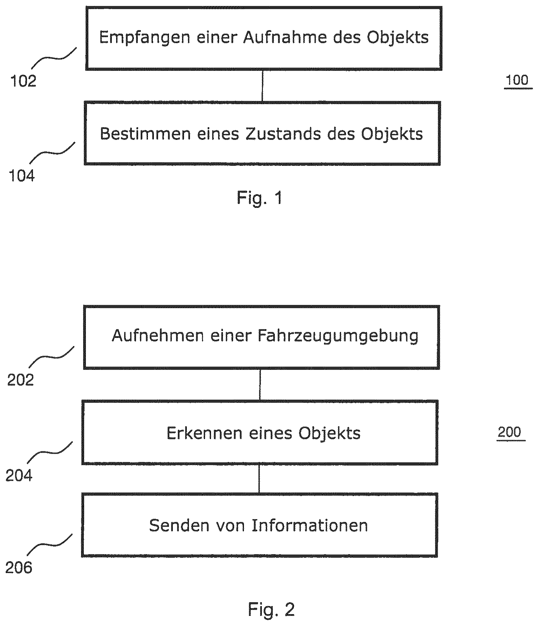

**Fig. 1** zeigt ein Verfahren 100 zur Zustandsüberwachung eines Objekts. Das Verfahren 100 umfasst ein Empfangen 102 einer Aufnahme des Objekts von einem Fahrzeug. Ferner umfasst das Verfahren 100 ein Bestimmen 104 eines Zustands des Objekts basierend auf der Aufnahme des Objekts.

Das Verfahren 100 kann eine automatisierte Erfassung von Objekten durch z.B. vorbeifahrende Fahrzeuge ermöglichen. Ebenso kann die Auswertung der Aufnahme automatisiert erfolgen. Eine regelmäßige, manuelle Überwachung des Objekts durch eine menschliche Person kann dadurch entfallen.

Ein Fahrzeug ist ein mobiles Verkehrsmittel für den Transport von Personen oder Gütern. Bei einem Fahrzeug kann es sich daher sowohl um ein Personen- als auch um ein Nutzfahrzeug handeln. Zum Beispiel kann ein Fahrzeug ein Personenkraftwagen, ein Lastkraftwagen, ein Motorrad oder ein Traktor sein. Allgemein kann ein Fahrzeug als eine Vorrichtung aufgefasst werden, die einen Motor, ein Antriebsstrangsystem sowie Räder umfasst.

Die Aufnahme des Objekts kann beispielsweise durch eine Kamera des Fahrzeugs erfolgen. Bei der Kamera kann es sich z.B. um eine Standbildkamera als auch um eine Bewegtbildkamera handeln. In einigen Ausführungsbeispielen kann die Aufnahme z.B. eine Aufnahme einer Kamera eines Fahrassistenzsystems des Fahrzeugs sein. Mehr und mehr Fahrzeug sind mit Fahrassistenzsystemen (z.B. Spurhalteassistent oder Verkehrszeichenerkennung) ausgestattet, die eine oder mehrere Kameras aufweisen. Durch Nutzen einer bereits im Fahrzeug vorhandenen Kamera eines solchen Fahrassistenzsystems kann das Verfahren mit lediglich geringen Änderungen im Fahrzeug (z.B. im Wesentlichen Änderungen im Soft- / Firmwarebereich) implementiert werden.

Bei dem Objekt kann es sich um jegliches im öffentlichen Raum befindliche Objekt handeln, das überwacht werden soll. Beispielsweise kann es sich bei dem Objekt um ein Verkehrsschild, einen Leitpfosten, eine Fahrspur einer Straße (z.B. des Oberflächenbelags der Fahrspur), eine Fahrbahnmarkierung, eine Bepflanzung am Straßenrand, eine Straßenbeleuchtungsanlage oder auch eine Lichtsignalanlage handeln.

Das Bestimmen 104 des Zustands des Objekts basierend auf der Aufnahme des Objekts kann gemäß einer Vielzahl von möglichen Auswertekriterien bzw. Bildauswerteverfahren erfolgen. Beispielsweise kann das Bestimmen 104 des Zustands des Objekts ein Vergleichen der Aufnahme des Objekts mit zumindest einer Referenzaufnahme umfassen. Die Referenzaufnahme gibt dabei das Objekt in einem gewünschten Sollzustand wieder. Beispielsweise über ein sog. Pattern-Matching-Verfahren kann nun die Aufnahme des Objekts mit der Referenzaufnahme verglichen werden. Derart kann festgestellt werden, ob der Zustand des Objekts (noch) dem gewünschten Sollzustand entspricht oder der Zustand des Objekts von dem Sollzustand abweicht.

Das Verfahren 100 kann beispielsweise ferner ein Senden einer Nachricht an eine Kommunikationseinrichtung (z.B. Mobiltelefon, Smartphone, Computer, Tablet-Computer, Laptop, Back-End) eines Verantwortlichen für das Objekt umfassen, wenn der Zustand des Objekts von einem Sollzustand abweicht. Derart kann der Verantwortliche für das Objekt unmittelbar über die Abweichung des Zustands des Objekts von dem Sollzustand informiert werden. Der Verantwortliche für das Objekt kann daher umgehend (sofort) auf den festgestellten Zustand des Objekts zu reagieren. Bei dem Verantwortlichen für das Objekt kann es sich z.B. um einen Bediensteten oder Angestellten einer Behörde bzw. einer Firma, die für die Instandhaltung bzw. Instandsetzung des Objekts verantwortlich ist, handeln. Beispielsweise können mit dem Verfahren 100 beschädigte Verkehrsschilder frühzeitig erkannt und der Mangel behoben werden.

In einigen Ausführungsbeispielen kann das Verfahren 100 ferner auch ein Empfangen, von einem zweiten Fahrzeug, von Informationen über das Erkennen des Objekts durch das zweite Fahrzeug. Bei dem zweiten Fahrzeug kann es sich beispielsweise um ein Fahrzeug handeln, dass mit einer Verkehrszeichenerkennung ausgestattet ist. Derart kann die Auswertung von Aufnahmen der Fahrzeugumgebung bereits durch im Fahrzeug vorhandene Kapazitäten (d.h. die Verkehrszeichenerkennung) erfolgen. Dass das Fahrzeug das Objekt erkennen kann, kann dabei ein Indikator sein, dass der Zustand des Objekts (noch) einem Sollzustand entspricht.

Entsprechend kann das Bestimmen 104 des Zustands des Objekts ferner auf den Informationen über das Erkennen des Objekts durch das zweite Fahrzeug basieren. Das heißt, für die Bestimmung des Zustands des Objekts können neben der Auswertung der empfangenen Aufnahmen des Objekts auch die Informationen, dass das Objekt von Fahrzeugen erkannt wurde, verwendet werden. Erkennen z.B. mehrere Fahrzeuge das Objekt (z.B. 5, 10 oder 15 Fahrzeuge), kann dies bedeuten, dass der Zustand des Objekts (noch) einem Sollzustand des Objekts entspricht. Entsprechend kann bestimmt werden, dass das Objekt dem Sollzustand entspricht. Übermittelt z.B. nur ein Fahrzeug, dass es das Objekt erkannt hat, und ergibt die Auswertung mehrerer von weiteren Fahrzeugen empfangener Aufnahmen, dass das Objekt von dem Sollzustand abweicht, kann bestimmt werden, dass der Zustand des Objekts von dem Sollzustand des Objekts abweicht.

Das Aufnehmen des Objekts kann dabei auch gezielt erfolgen. Beispielsweise kann das Verfahren 100 dazu ferner ein Senden einer Aufforderung, eine Aufnahme einer Fahrzeugumgebung zu machen, an Fahrzeuge in einer Umgebung des Objekts umfassen. Derart können Fahrzeuge in der Umgebung des Objekts aktiv angestoßen werden, Aufnahmen der Fahrzeugumgebung zu machen. Bei der Fahrzeugumgebung handelt es sich um die Umgebung bzw. Umwelt eines Fahrzeugs. Entsprechend kann eine Aufnahme eines Fahrzeugs z.B. einen Bereich vor, seitlich, hinter, oberhalb oder unterhalb des Fahrzeugs oder eine Kombination davon darstellen. Diese Aufnahmen können von dem Fahrzeug empfangen und gemäß den obigen Ausführungen ausgewertet werden. Auf diese Weise können von mehreren Fahrzeugen Aufnahmen der jeweiligen Fahrzeugumgebung in einem Gebiet um das interessierende Objekt herum erhalten werden. Da sich die Fahrzeuge in der Umgebung des Objekts bewegen, ist die Wahrscheinlichkeit, dass das Objekt auf zumindest einem Teil der Aufnahmen abgebildet ist, hoch.

So kann beispielsweise, um den Zustand eines Verkehrsschildes zu bestimmen, eine Aufforderung, eine Aufnahme einer Fahrzeugumgebung zu machen, an Fahrzeuge in einer Umgebung des Verkehrsschildes gesendet werden. Die Aufforderung kann z.B. an Fahrzeuge, die sich entlang einer Straße, in der sich das Verkehrsschild befindet, bewegen; an Fahrzeuge, die sich innerhalb eines vorbestimmten Umkreises, um das Verkehrsschild befinden; oder an Fahrzeuge, deren geplante Fahrtroute an dem Straßenschild vorbeiführt, gesendet werden. Diese können dann Aufnahmen ihrer jeweiligen Fahrzeugumgebung machen und die Aufnahmen aussenden. Weisen eines oder mehrere der Fahrzeuge eine Verkehrszeichenerkennung auf, können diese auch die Information, dass das Verkehrsschild erkannt wurde, aussenden. Derart können gezielt Informationen gesammelt werden, die eine Beurteilung des Zustands des Verkehrsschilds ermöglichen.

Das Senden der Aufforderung erfolgt über einen vorbestimmten Zeitraum. Der Zeitraum kann z.B. so geplant sein, dass möglichst viele Fahrzeuge das Objekt passieren, um eine große Menge an Informationen (Aufnahmen des Objekts bzw. Information, dass Objekt vom Fahrzeug erkannt wurde) von den Fahrzeugen zu erhalten. Auch kann der Zeitraum so geplant sein, dass die äußeren Bedingungen (z.B. Tageszeit, Stellung der Sonne) ideal für die Aufnahme der Fahrzeugumgebung bzw. des Objekts sind.

Alternativ kann das Senden der Aufforderung auch solange erfolgen, bis eine vorbestimmte Anzahl von Aufnahmen des Objekts empfangen wurde und/oder von einer vorbestimmten Anzahl an Fahrzeugen Informationen über das Erkennen des Objekts durch das jeweilige Fahrzeug empfangen wurden. Derart kann aktiv eine zuvor bestimmte Menge an Informationen über das Objekt gesammelt werden, um diese anschließend auszuwerten. Eine für die Auswertung unnötige Ansammlung größerer Datenmengen kann somit vermieden werden.

Ferner erfolgt das Senden der Aufforderung abhängig von einer Auslastung eines Mobilfunknetzes in der Umgebung des Objekts. Derart können z.B. Zeiten mit einer geringen Auslastung des Mobilfunknetzes in der Umgebung des Objekts genutzt werden, um Aufnahmen der Fahrzeugumgebung bzw. des Objekts zu machen und diese zu übertragen. In Zeiten mit hoher Auslastung des Mobilfunknetzes in der Umgebung des Objekts wird das Senden der Aufforderung unterbrochen bzw. ausgesetzt werden, um eine weiteres Ansteigen der Auslastung des Mobilfunknetzes zu vermeiden. Eine Überlastung des Mobilfunknetzes bzw. eine geminderte Benutzererfahrung (engl. user experience) hinsichtlich des Mobilfunknetzes kann somit vermieden werden.

Das Verfahren 100 kann beispielsweise auf einer Datenverarbeitungsanlage (Back-End) wie einem Server, einem Rechenzentrum oder eine Computer-Cloud ablaufen. Wie bereits oben angedeutet, können die Daten von den Fahrzeugen z.B. über ein Mobilfunknetz (d.h. ein zellulares Netzwerk) oder eine sonstige Funktechnologie (z.B. drahtloses lokales Netzwerk) empfangen werden.

**Fig. 2** zeigt nun noch ein weiteres Verfahren 200 zur Zustandsüberwachung eines Objekts. Das Verfahren 200 umfasst ein Aufnehmen 202 einer Fahrzeugumgebung durch ein Fahrzeug. Ferner umfasst das Verfahren 200 ein Erkennen 204 eines Objekts in der aufgenommenen Fahrzeugumgebung durch das Fahrzeug. Das Verfahren 200 umfasst zudem ein Senden 206 von Informationen über das Erkennen des Objekts an eine Datenverarbeitungsanlage zur Zustandsüberwachung des Objekts.

Das Verfahren 200 kann ebenso eine automatisierte Erfassung von Objekten durch z.B. vorbeifahrende Fahrzeuge ermöglichen. Die Informationen über das Erkennen des Objekts können eine automatisierte Bestimmung eines Zustands des Objekts durch die Datenverarbeitungsanlage ermöglichen. Eine regelmäßige, manuelle Überwachung des Objekts durch eine menschliche Person kann dadurch entfallen.

Das Erkennen 204 des Objekts in der aufgenommenen Fahrzeugumgebung kann z.B. durch ein Fahrassistenzsystem (wie etwa eine Verkehrszeichenerkennung) des Fahrzeugs erfolgen. Ebenso kann auch das Aufnehmen 204 der Fahrzeugumgebung durch ein Fahrassistenzsystem (wie etwa eine Verkehrszeichenerkennung) des Fahrzeugs erfolgen. Derart kann für die Ausführung des Verfahrens auf bereits im Fahrzeug vorhandene Kapazitäten zurückgegriffen werden. Für die Implementierung des Verfahrens können dann nur mehr geringe Änderungen im Fahrzeug (z.B. im Wesentlichen Änderungen im Soft- / Firmwarebereich) nötig sein.

Bei der Datenverarbeitungsanlage zur Zustandsüberwachung des Objekts handelt es sich um eine Datenverarbeitungsanlage (z.B. Back-End, Server, Rechenzentrum oder Computer-Cloud), auf der Software ausgeführt wird, um den Zustand des Objekts zu überwachen. Beispielsweise kann auf der Datenverarbeitungsanlage eine Software zum Durchführen des obigen Verfahrens 100 ablaufen.

Bei dem überwachten Objekt kann es sich wiederum um jegliches im öffentlichen Raum befindliche Objekt handeln, das überwacht werden soll. Beispielsweise kann es sich bei dem Objekt um ein Verkehrsschild, einen Leitpfosten, eine Fahrspur einer Straße (z.B. des Oberflächenbelags der Fahrspur), eine Fahrbahnmarkierung, eine Bepflanzung am Straßenrand, eine Straßenbeleuchtungsanlage oder auch eine Lichtsignalanlage handeln.

Die Informationen über das Erkenn des Objekts geben dabei an, dass das Objekt durch das Fahrzeug erkannt wurde. Die Informationen über das Erkenn des Objekts können daher also Informationen über die Art bzw. Identität des Objekts enthalten. Ebenso können die Informationen über das Erkenn des Objekts auch Informationen über den Zeitpunkt der Aufnahme des Objekts bzw. des Zeitpunkts des Erkennens des Objekts umfassen. In einigen Ausführungsbeispielen können die Informationen über das Erkennen des Objekts auch Informationen über eine Position des Fahrzeugs umfassen. Aus den Informationen über die Art des Objekts und die Position des Fahrzeugs kann die Datenverarbeitungsanlage z.B. auf die Identität des Objekts schließen, d.h. beispielsweise feststellen, dass es sich um ein bestimmtes Verkehrsschild an einer bestimmten Position handelt.

Gemäß einigen Ausführungsbeispielen kann das Verfahren 200 auch ein Empfangen einer Nachricht von der Datenverarbeitungsanlage durch das Fahrzeug umfassen, wobei die Nachricht eine Aufforderung, die Fahrzeugumgebung aufzunehmen, umfasst. Derart kann die Aufnahme der Umgebung gezielt erfolgen. Wie bereits oben bei Verfahren 100 angedeutet, kann die Aufforderung nur in einer Umgebung des Objekts empfangen werden. Derart kann das Fahrzeug von der Datenverarbeitungsanlage aktiv angestoßen werden, Aufnahmen der Fahrzeugumgebung zu machen. Ein Erkennen des Objekts durch das Fahrzeug, um den Zustand des Objekts bestimmen zu können, kann somit aktiv angestoßen werden. Wie bereits oben zu Verfahren 100 angemerkt, kann das Aussenden der Aufforderung und somit auch der Empfang der Aufforderung durch das Fahrzeug zeitlich begrenzt sein.

Erkennt das Fahrzeug in der Aufnahme der Fahrzeugumgebung das Objekt nicht, kann das Fahrzeug die Aufnahme der Fahrzeugumgebung, wie oben bereits zu Verfahren 100 angedeutet, an die Datenverarbeitungsanlage senden, welche die Aufnahme der Fahrzeugumgebung anschließend auswerten kann (z.B. gemäß den zu Verfahren 100 beschriebenen Grundsätzen).

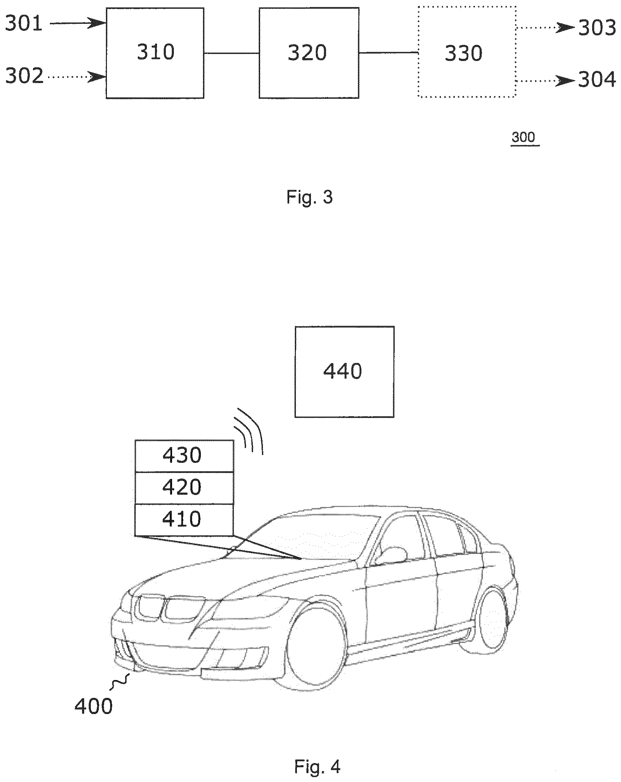

Im Weiteren ist in Fig. 3 eine Datenverarbeitungsanlage 300 zur Zustandsüberwachung eines Objekts gezeigt. Die Datenverarbeitungsanlage 300 umfasst eine Empfangsschaltung 310, die eingerichtet ist, eine Aufnahme 301 des Objekts von einem Fahrzeug zu empfangen. Ferner umfasst die Datenverarbeitungsanlage 300 eine Auswerteschaltung 320, die eingerichtet ist, einen Zustand des Objekts basierend auf der Aufnahme zu bestimmen.

Das Datenverarbeitungsanlage 300 kann eine automatisierte Erfassung von Objekten durch z.B. vorbeifahrende Fahrzeuge ermöglichen sowie eine automatisierte Auswertung der Aufnahme ermöglichen. Eine regelmäßige, manuelle Überwachung des Objekts durch eine menschliche Person kann dadurch entfallen.

Bei der Empfangsschaltung 310 handelt es sich um eine Schaltung, die eingerichtet ist, z.B. über ein Mobilfunknetz oder ein sonstiges Funknetzwerk Daten von dem Fahrzeug zu empfangen. Beispielsweise kann die Empfangsschaltung 310 dazu einen Empfänger oder einen Sendeempfänger sowie entsprechende Prozessorschaltungen für das Basisbandprozessieren der empfangenen Daten umfassen.

Die Auswerteschaltung 320 kann z.B. einen oder mehrere Prozessoren bzw. einen oder mehrere Prozessorkerne, einen anwendungsspezifischen integrierten Schaltkreis (engl. ASIC = Application-Specific Integrated Circuit), einen integrierten Schaltkreis (engl. IC = Integrated Circuit), ein Ein-Chip-System (engl. SoC = System on a Chip), ein programmierbares Logikelement oder ein feldprogrammierbares Gatterarray mit einem Mikroprozessor (engl. FPGA = Field Programmable Gate Array) aufweisen, auf dem Software für die Bestimmung des Zustands des Objekts bzw. die Auswertung der Aufnahme 301 des Objekts abläuft. Ferner kann die Auswerteschaltung 320 einen oder mehrere Speicher aufweisen, in denen z.B. die Software für die Bestimmung des Zustands des Objekts bzw. die Auswertung der Aufnahme 301 des Objekts oder sonstige Daten gespeichert sein können. So kann die Auswerteschaltung 320 beispielsweise eingerichtet ist, die Aufnahme 301 des Objekts mit zumindest einer Referenzaufnahme zu vergleichen.

Die Empfangsschaltung 310 kann weiterhin eingerichtet sein, von einem zweiten Fahrzeug Informationen 302 über das Erkennen des Objekts durch das zweite Fahrzeug zu empfangen.

Entsprechend kann die Auswerteschaltung 320 ferner eingerichtet sein, den Zustand des Objekts ferner auf Basis der Informationen 302 über das Erkennen des Objekts durch das zweite Fahrzeug zu bestimmen.

Dass das zweite Fahrzeug das Objekt erkennen kann, kann - wie bereits zu Verfahren 100 angedeutet - ein Indikator dafür sein, dass der Zustand des Objekts (noch) einem Sollzustand entspricht. Entsprechend können für die Bestimmung des Zustands des Objekts können neben der Auswertung der empfangenen Aufnahmen des Objekts auch die Informationen, dass das Objekt von Fahrzeugen erkannt wurde, verwendet werden.

In einigen Ausführungsbeispielen kann die Datenverarbeitungsanlage 300 zudem eine Sendeschaltung 330 umfassen, die eingerichtet ist, eine Nachricht 303 an eine Kommunikationseinrichtung eines Verantwortlichen für das Objekt zu senden, wenn der Zustand des Objekts von einem Sollzustand abweicht. Derart kann der Verantwortliche für das Objekt unmittelbar über die Abweichung des Zustands des Objekts von dem Sollzustand informiert werden, sodass dieser umgehend (sofort) auf den festgestellten Zustand des Objekts reagieren kann. Die Sendeschaltung kann dazu einen Sender oder einen Sendeempfänger umfassen, um über ein Mobilfunknetz oder eine sonstige Funktechnologie mit den Fahrzeugen zu kommunizieren. In einigen Ausführungsbeispielen können die Empfangsschaltung 310 und die Sendeschaltung 330 einen oder mehrere gemeinsam genutzte Sendeempfänger umfassen.

Ferner ist die Sendeschaltung 330 eingerichtet, eine Aufforderung 304, eine Aufnahme einer Fahrzeugumgebung zu machen, an Fahrzeuge in einer Umgebung des Objekts zu senden. Derart können Fahrzeuge in der Umgebung des Objekts aktiv angestoßen werden, Aufnahmen der Fahrzeugumgebung zu machen. Wie bereits zu Verfahren 100 angedeutet, können auf diese Weise von mehreren Fahrzeugen Aufnahmen der jeweiligen Fahrzeugumgebung in einem Gebiet um das interessierende Objekt herum erhalten werden. Da sich die Fahrzeuge in der Umgebung des Objekts bewegen, ist die Wahrscheinlichkeit, dass das Objekt auf zumindest einem Teil der Aufnahmen abgebildet ist, hoch.

Die Datenverarbeitungsanlage 300 als auch ihre einzelnen Bestandteile (d.h. die Empfangsschaltung 310, die Auswerteschaltung 320 und optional die Sendeschaltung 330) können in einigen Ausführungsbeispielen ferner eingerichtet sein, einen oder mehrere Verfahrensschritte, die vorangehend in Zusammenhang mit Verfahren 100 beschrieben sind, auszuführen.

Im Weiteren ist in **Fig. 4** noch ein Fahrzeug 400 gezeigt. Das Fahrzeug 400 umfasst eine Kamera 410, die eingerichtet ist, eine Fahrzeugumgebung aufzunehmen. Ferner umfasst das Fahrzeug 400 eine Auswerteschaltung 420, die eingerichtet ist, ein Objekt in der aufgenommenen Fahrzeugumgebung zu erkennen. Das Fahrzeug 400 umfasst weiterhin eine Sendeschaltung 430, die eingerichtet ist, Informationen über das Erkennen des Objekts an eine Datenverarbeitungsanlage 440 zur Zustandsüberwachung des Objekts zu senden.

Das Fahrzeug 400 kann eine automatisierte Erfassung von Objekten ermöglichen. Die Informationen über das Erkennen des Objekts können eine automatisierte Bestimmung eines Zustands des Objekts durch die Datenverarbeitungsanlage 440 ermöglichen. Eine regelmäßige, manuelle Überwachung des Objekts durch eine menschliche Person kann dadurch entfallen.

Bei der Kamera 410 kann es sich z.B. um eine Standbildkamera als auch um eine Bewegtbildkamera handeln. Die Kamera 410 erfasst eine Umgebung (Umwelt) des Fahrzeugs 400. Beispielsweise kann die Kamera einen Bereich vor, seitlich, hinter, über oder unter dem Fahrzeug 400 bzw. eine Kombination davon aufnehmen.

Die Auswerteschaltung 420 kann z.B. einen oder mehrere Prozessoren bzw. einen oder mehrere Prozessorkerne, einen ASIC, einen IC, ein SoC, eine Logikschaltung oder ein FPGA aufweisen, auf dem Software für die Erkennung des Objekts abläuft. Ferner kann die Auswerteschaltung 420 einen oder mehrere Speicher aufweisen, in denen z.B. die Software für die Erkennung des Objekts oder sonstige Daten gespeichert sein können.

Die Sendeschaltung 430 kann beispielsweise einen Sender oder einen Sendeempfänger umfassen, um über ein Mobilfunknetz oder eine sonstige Funktechnologie mit der Datenverarbeitungsanlage 440 zu kommunizieren.

Bei der Kamera 410 kann es sich z.B. um eine Kamera eines Fahrassistenzsystem (wie etwa eine Verkehrszeichenerkennung) des Fahrzeugs handeln. Ebenso kann die Auswerteschaltung 420 Bestandteil eines Fahrassistenzsystems des Fahrzeugs ist. Derart auf bereits im Fahrzeug vorhandene Kapazitäten zurückgegriffen werden. Für die Implementierung des vorgeschlagenen Konzepts können dann nur mehr geringe Änderungen im Fahrzeug (z.B. im Wesentlichen Änderungen im Soft- / Firmwarebereich) nötig sein.

Bei der Datenverarbeitungsanlage 440 zur Zustandsüberwachung des Objekts handelt es sich um eine Datenverarbeitungsanlage (z.B. Back-End, Server, Rechenzentrum oder Computer-Cloud), auf der Software ausgeführt wird, um den Zustand des Objekts zu überwachen. Beispielsweise kann auf der Datenverarbeitungsanlage eine Software zum Durchführen des obigen Verfahrens 100 ablaufen.

In einigen Ausführungsbeispielen kann die Sendeschaltung 430 ferner eingerichtet sein, die aufgenommen Fahrzeugumgebung an die Datenverarbeitungsanlage 440 zu senden. Beispielsweise kann die aufgenommen Fahrzeugumgebung an die Datenverarbeitungsanlage 440 gesendet werden, wenn die Auswerteschaltung 420 das Objekt in der aufgenommen Fahrzeugumgebung nicht erkennt bzw. nicht erkennen kann. In der Datenverarbeitungsanlage 440 kann dann mit ggf. höherer Rechenleistung bzw. leistungsfähigeren Ansätzen erneut versucht werden, dass Objekt in der aufgenommen Fahrzeugumgebung zu erkennen bzw. festzustellen, dass ein Zustand des Objekts von einem Sollzustand für das Objekt abweicht.

In einigen Ausführungsbeispielen kann das Fahrzeug 400 weiterhin eine Empfangsschaltung (nicht gezeigt) aufweisen, die eingerichtet ist, eine Nachricht von der Datenverarbeitungsanlage 440 zu empfangen, wobei die Nachricht eine Aufforderung, die Fahrzeugumgebung aufzunehmen, umfasst.

Derart kann das Fahrzeug 400 gezielt von der Datenverarbeitungsanlage 440 angestoßen werden, die Fahrzeugumgebung gezielt aufzunehmen. Wie bereits oben bei Verfahren 100 angedeutet, kann die Aufforderung nur in einer Umgebung des Objekts empfangen werden. Ein Erkennen des Objekts durch das Fahrzeug 400, um den Zustand des Objekts bestimmen zu können, kann somit aktiv angestoßen werden. Wie bereits oben zu Verfahren 100 angemerkt, kann das Aussenden der Aufforderung und somit auch der Empfang der Aufforderung durch das Fahrzeug 400 zeitlich begrenzt sein.

Das Fahrzeug 400 als auch ihre einzelnen Bestandteile (d.h. die Kamera 410, die Auswerteschaltung 420, die Sendeschaltung 430 und optional die Empfangsschaltung) können in einigen Ausführungsbeispielen ferner eingerichtet sein, einen oder mehrere Verfahrensschritte, die vorangehend in Zusammenhang mit Verfahren 200 beschrieben sind, auszuführen.

In einigen Ausführungsbeispielen des vorgeschlagenen Konzepts kann somit mit Hilfe von Fahrerassistenzkameras das Umfeld eines Fahrzeugs erfasst werden. Einige Verkehrsschilder werden bereits heute vom Fahrzeug erkannt und im Fahrzeug für den Fahrer beispielsweise im Kombiinstrument oder im Head-Up Display angezeigt. Werden nun die erfassten Schilder z.B. laufend oder in regelmäßigen Abständen an das Back-End übertragen, kann dort laufend eine Zustandsüberwachung der Schilder erfolgen. Neben den Verkehrsschildern kann auch der Straßenzustand oder die Bepflanzung am Straßenrand überprüft werden. Bei Unregelmäßigkeiten können diese dann beispielsweise zeitnah erkannt und begutachtet/korrigiert werden (nicht erst bei der nächsten routinemäßigen Überprüfung wie bisher). Heutige Verfahren zum Überprüfen von Verkehrsschildern sind in der Regel manuell und mit hohem Aufwand verbunden. Entsprechend kann in der automatisierten Erfassung der Zustände der Infrastruktur ein großer ökonomischer Vorteil liegen. Durch kürzere Reaktionszeiten (Häufigkeit von vorbeifahrenden Fahrzeugen vs. manuellen Inspektionen) auf erkannte nicht ordnungsgemäße Verkehrsschilder können außerdem potentielle Unfälle verhindert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen ASIC, einen IC, ein SOC oder ein FPGA gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren (100) für eine Datenverarbeitungsanlage (300, 440) zur Zustandsüberwachung eines Objekts, umfassend:
Empfangen (102), durch eine Empfangsschaltung (310) der Datenverarbeitungsanlage (300, 440), einer Aufnahme des Objekts von einem Fahrzeug (400) über ein drahtloses Netzwerk;
Bestimmen (104), durch eine Auswerteschaltung (320) der Datenverarbeitungsanlage (300, 440), eines Zustands des Objekts basierend auf der Aufnahme des Objekts; und
Senden, durch eine Sendeschaltung (330) der Datenverarbeitungsanlage (300, 440), einer Aufforderung (304), eine Aufnahme einer Fahrzeugumgebung zu machen, an Fahrzeuge in einer Umgebung des Objekts, **dadurch gekennzeichnet, dass** das Senden der Aufforderung über einen vorbestimmten Zeitraum und abhängig von einer Auslastung eines Mobilfunknetzes in der Umgebung des Objekts erfolgt, wobei in Zeiten mit hoher Auslastung des Mobilfunknetzes in der Umgebung des Objekts das Senden der Aufforderung unterbrochen wird.

2. Verfahren nach Anspruch 1, wobei das Verfahren ferner Folgendes umfasst: Senden, durch die Sendeschaltung (330), einer Nachricht an eine Kommunikationseinrichtung eines Verantwortlichen für das Objekt, wenn der Zustand des Objekts von einem Sollzustand abweicht.

3. Verfahren nach Anspruch 1 oder Anspruch 2, wobei das Bestimmen (104) des Zustands des Objekts Folgendes umfasst: Vergleichen, durch die Auswerteschaltung (320), der Aufnahme des Objekts mit zumindest einer Referenzaufnahme.

4. Verfahren nach einem der Ansprüche 1 bis 3, ferner umfassend: Empfangen, durch die Empfangsschaltung (310) und von einem zweiten Fahrzeug, von Informationen über das Erkennen des Objekts durch das zweite Fahrzeug.

5. Verfahren nach Anspruch 4, wobei das Bestimmen (104) des Zustands des Objekts ferner auf den Informationen über das Erkennen des Objekts durch das zweite Fahrzeug basiert.

6. Verfahren nach einem der vorhergehenden Ansprüche, wobei die Aufnahme eine Aufnahme einer Kamera eines Fahrassistenzsystems des Fahrzeugs (400) ist

7. Verfahren nach einem der vorhergehenden Ansprüche, wobei das Objekt ein Verkehrsschild, eine Fahrspur einer Straße oder eine Bepflanzung am Straßenrand ist.

8. Programm mit einem Programmcode zum Durchführen eines der Verfahren gemäß einem der Ansprüche 1 bis 7, wenn der Programmcode auf einem Computer, einem Prozessor oder einer programmierbaren Hardwarekomponente ausgeführt wird.

9. Datenverarbeitungsanlage (300) zur Zustandsüberwachung eines Objekts, umfassend:
eine Empfangsschaltung (310), die eingerichtet ist, eine Aufnahme (301) des Objekts über
ein drahtloses Netzwerk von einem Fahrzeug (400) zu empfangen; und
eine Auswerteschaltung (320), die eingerichtet ist, einen Zustand des Objekts basierend auf der Aufnahme zu bestimmen,
eine Sendeschaltung (330), die eingerichtet ist, über einen vorbestimmten Zeitraum und abhängig von einer Auslastung eines Mobilfunknetzes in einer Umgebung des Objekts eine Aufforderung (304), eine Aufnahme einer Fahrzeugumgebung zu machen, an Fahrzeuge in der Umgebung des Objekts zu senden, wobei in Zeiten mit hoher Auslastung des Mobilfunknetzes in der Umgebung des Objekts das Senden der Aufforderung unterbrochen wird.

10. Datenverarbeitungsanlage nach Anspruch 9, wobei die Sendeschaltung (330) ferner eingerichtet ist, eine Nachricht an eine Kommunikationseinrichtung eines Verantwortlichen für das Objekt zu senden, wenn der Zustand des Objekts von einem Sollzustand abweicht.

11. Datenverarbeitungsanlage nach Anspruch 9 oder Anspruch 10, wobei die Auswerteschaltung (320) eingerichtet ist, den Zustand des Objekts durch Vergleichen der Aufnahme des Objekts mit zumindest einer Referenzaufnahme zu bestimmen.

12. Datenverarbeitungsanlage nach einem der Ansprüche 9 bis 11, wobei die Empfangsschaltung (310) ferner eingerichtet ist, von einem zweiten Fahrzeug Informationen (302) über das Erkennen des Objekts durch das zweite Fahrzeug zu empfangen.

13. Datenverarbeitungsanlage nach Anspruch 12, wobei die Auswerteschaltung (320) ferner eingerichtet ist, den Zustand des Objekts ferner auf Basis der Informationen über das Erkennen des Objekts durch das zweite Fahrzeug zu bestimmen.

## Claims

1. A method (100) for a data processing system (300, 440) for monitoring the condition of an object, comprising:
receiving (102), by a receiving circuit (310) of the data processing system (300, 440), a photo of the object from a vehicle (400) via a wireless network;
determining (104), by an evaluation circuit (320) of the data processing system (300, 440), a state of the object based on the photo of the object; and
transmitting, by a transmission circuit (330) of the data processing system (300, 440), a request (304) to take a photo of a vehicle environment to vehicles in an environment of the object, **characterized in that**
the transmission of the request takes place over a predetermined period of time and depending on a utilization of a mobile radio network in the environment of the object, the transmission of the request being interrupted in times of high utilization of the mobile radio network in the environment of the object.

2. The method of claim 1, wherein the method further comprises:
transmitting, by the transmission circuit (330), a message to a communication device of a person responsible for the object if the state of the object deviates from a target state.

3. The method of claim 1 or claim 2, wherein determining (104) the state of the object comprises:
comparing, by the evaluation circuit (320), the photo of the object with at least one reference photo.

4. The method of any one of claims 1 to 3, further comprising:
receiving, by the receiving circuit (310) and from a second vehicle, information about the detection of the object by the second vehicle.

5. The method of claim 4, wherein determining (104) the state of the object is further based on the information about the detection of the object by the second vehicle.

6. The method of any one of the preceding claims, wherein the photo is a photo taken by a camera of a driving assistance system of the vehicle (400).

7. The method of any one of the preceding claims, wherein the object is a traffic sign, a lane of a road or a roadside planting.

8. A program having a program code for executing one of the methods of one of claims 1 to 7, when the program code is executed on a computer, a processor or a programmable hardware component.

9. A data processing system (300) for monitoring the condition of an object, comprising:
a receiving circuit (310) configured to receive a photo (301) of the object from a vehicle (400) via a wireless network; and
an evaluation circuit (320) configured to determine a state of the object based on the photo,
a transmission circuit (330) configured to transmit a request (304) to take a photo of a vehicle environment to vehicles in the environment of the object over a predetermined period of time and depending on a utilization of a mobile radio network in an environment of the object, the transmission of the request being interrupted in times of high utilization of the mobile radio network in the environment of the object.

10. The data processing system of claim 9, wherein the transmission circuit (330) is further configured to transmit a message to a communication device of a person responsible for the object if the state of the object deviates from a target state.

11. The data processing system of claim 9 or claim 10, wherein the evaluation circuit (320) is configured to determine the state of the object by comparing the photo of the object with at least one reference photo.

12. The data processing system of any one of claims 9 to 11, wherein the receiving circuit (310) is further configured to receive information (302) from a second vehicle about the detection of the object by the second vehicle.

13. The data processing system of claim 12, wherein the evaluation circuit (320) is further configured to determine the state of the object further based on the information about the detection of the object by the second vehicle.

## Revendications

1. Procédé (100) pour une installation de traitement de données (300, 440) pour la surveillance de l'état d'un objet, comprenant le fait de :
recevoir (102), par un circuit de réception (310) de l'installation de traitement de données (300, 440), une photo de l'objet provenant d'un véhicule (400) par l'intermédiaire d'un réseau sans fil ;
déterminer (104), par un circuit d'évaluation (320) de l'installation de traitement de données (300, 440), un état de l'objet sur la base de la photo de l'objet ; et
envoyer, par un circuit d'émission (330) de l'installation de traitement de données (300, 440), une invitation (304) à prendre une photo d'un environnement de véhicule à des véhicules dans un environnement de l'objet, **caractérisé en ce que**
le fait d'envoyer l'invitation s'effectue sur une période de temps prédéterminée et en fonction d'une utilisation d'un réseau radio mobile dans l'environnement de l'objet, le fait d'envoyer l'invitation étant interrompu pendant des périodes de forte utilisation du réseau radio mobile dans l'environnement de l'objet.

2. Procédé selon la revendication 1, dans lequel le procédé comprend en outre le fait de :
envoyer, par le circuit d'émission (330), un message à un dispositif de communication d'un responsable de l'objet lorsque l'état de l'objet s'écarte d'un état cible.

3. Procédé selon la revendication 1 ou la revendication 2, dans lequel le fait de déterminer (104) l'état de l'objet comprend le fait de :
comparer, par le circuit d'évaluation (320), la photo de l'objet avec au moins une photo de référence.

4. Procédé selon l'une des revendications 1 à 3, comprenant en outre le fait de :
recevoir, par le circuit de réception (310) et en provenance d'un deuxième véhicule, des informations concernant la détection de l'objet par le deuxième véhicule.

5. Procédé selon la revendication 4, dans lequel le fait de déterminer (104) l'état de l'objet est en outre basé sur les informations concernant la détection de l'objet par le deuxième véhicule.

6. Procédé selon l'une des revendications précédentes, dans lequel la photo est une photo prise par une caméra d'un système d'assistance à la conduite du véhicule (400).

7. Procédé selon l'une des revendications précédentes, dans lequel l'objet est un panneau de signalisation, une voie de circulation d'une route ou une plantation en bordure de route.

8. Programme présentant un code de programme pour réaliser l'un des procédés selon l'une des revendications 1 à 7 lorsque le code de programme est exécuté sur un ordinateur, un processeur ou un composant matériel programmable.

9. Installation de traitement de données (300) pour la surveillance de l'état d'un objet, comprenant :
un circuit de réception (310) configuré pour recevoir une photo (301) de l'objet via un réseau sans fil provenant d'un véhicule (400) ; et
un circuit d'évaluation (320) configuré pour déterminer un état de l'objet sur la base de la photo,
un circuit d'émission (330) configuré pour envoyer, sur une période de temps prédéterminée et en fonction d'une utilisation d'un réseau radio mobile dans un environnement de l'objet, une invitation (304) à prendre une photo d'un environnement de véhicule à des véhicules dans l'environnement de l'objet, le fait d'envoyer l'invitation étant interrompu pendant des périodes de forte utilisation du réseau radio mobile dans l'environnement de l'objet.

10. Installation de traitement de données selon la revendication 9, dans lequel le circuit d'émission (330) est en outre configuré pour envoyer un message à un dispositif de communication d'un responsable de l'objet lorsque l'état de l'objet s'écarte d'un état cible.

11. Installation de traitement de données selon la revendication 9 ou la revendication 10, dans lequel le circuit d'évaluation (320) est configuré pour déterminer l'état de l'objet en comparant la photo de l'objet avec au moins une photo de référence.

12. Installation de traitement de données selon l'une des revendications 9 à 11, dans lequel le circuit de réception (310) est en outre configuré pour recevoir d'un deuxième véhicule des informations (302) relatives à la détection de l'objet par le deuxième véhicule.

13. Installation de traitement de données selon la revendication 12, dans lequel le circuit d'évaluation (320) est en outre configuré pour déterminer l'état de l'objet en se basant en outre sur les informations concernant la détection de l'objet par le deuxième véhicule.
